# EUROPÄISCHE PATENTSCHRIFT

(11) **EP 0 574 847 B1**
(45) Veröffentlichungstag und Bekanntmachung des Hinweises auf die Patenterteilung: **11.09.1996**
(21) Anmeldenummer: 93109426.2
(22) Anmeldetag: 12.06.1993
(51) Int. Cl.: B60N 2/28

(54) **Kindersitz, insbesondere Kinderfahrzeugsitz mit einem Untergestell**
Children's seat for vehicles, having a base frame
Siège d'enfants, pour véhicules, à chassis de base

(30) Priorität: 16.06.1992 DE 9208051 U
(43) Veröffentlichungstag der Anmeldung: 22.12.1993
(73) Patentinhaber: Schräder, Margarete, D-95352 Marktleugast (DE)
(72) Erfinder: Schräder, Margarete, D-95352 Marktleugast (DE)
(74) Vertreter: Tergau, Enno, Dipl.-Ing.

(56) Entgegenhaltungen:
- EP-A- 0 013 233
- CH-A- 560 531
- DE-U- 8 504 975
- FR-A- 2 395 167
- US-A- 4 604 773
- US-A- 4 634 177
- US-A- 4 729 600
- US-A- 4 743 063

## Beschreibung

Derartige Kindersitze weisen in aller Regel eine der Größe des Kindes angepaßte Sitzschale auf. Sie dienen zur körpergerechten Aufnahme und vor allen Dingen auch Unfallsicherung des Kindes, welches zu diesem Zweck auch in der Sitzschale festgegurtet sein kann.

Solche Sitze finden weitgehend auch außerhalb einer Einbaustellung im Automobil Verwendung. So ist es bekannt, derartige Sitze mit Tragegurten zum Tragen oder mit Einrichtungen zur Fixierung am Kopf eines Standgestells zur Bildung eines Hochstuhles zu fixieren.

Ein derartiger Kindersitz ist aus **CH 560 531** bekannt. Dort ist eine Sitzschale auf ein Untergestell aufsetz- und fixierbar. Die Sitzschale und das Untergestell bilden zusammen einen Hochstuhl. Um die Sitzschale auf dem Untergestell ortsfest Positionieren zu können, sind an der Sitzschale Gewindezapfen angeordnet, die sie in Horizontalrichtung überstehen. An dem Untergestell sind eine entsprechende Anzahl von Nuten zur Aufnahme und Lagefixierung der Gewindezapfen angeformt. Nach dem Aufsetzen auf das Untergestell wird die Sitzschale durch Aufschrauben von Handmuttern auf die Gewindezapfen endgültig fixiert. Anstatt der Gewindezapfen können auch Gewindeaufnahmen vorgesehen sein, in die zur Sitzschalenfixierung Gewindebolzen mit verdrehbaren Handgriffen einschraubbar sind.

Nachteilig an dieser Verbindungstechnik zwischen Sitzschale und Untergestell ist, daß nach dem Absenken der Sitzschale ein zusätzlicher Arbeitsschritt, nämlich das Verschrauben erforderlich ist. Die die Sitzschale überstehenden Gewindezapfen verursachen außerdem ein erhöhtes Verletzungsrisiko des Bedieners z.B. beim Transport der Sitzschale. Der Fixiervorgang ist auch deshalb kompliziert, da die Gewindezapfen praktisch punktförmig an der Sitzschale angreifen. greifen. Dadurch ist der Bediener zu einer sehr genauen Absenkbewegung gezwungen. Bereits geringe Ungenauigkeiten bei dem Aufsetzvorgang führen zum Verkanten und Verhaken von Gewindezapfen und Nuten. Sie werden deshalb leicht beschädigt. Die mechanische Stabilität des Kindersitzes ist auf Dauer nicht gewährleistet. Das Verkanten und Verhaken erfordert außerdem einen erneuten Aufsetzvorgang. Der vorbekannte Kindersitz ist dadurch sehr bedienungsunfreundlich.

Der praktisch punktförmige Kraftangriff führt weiterhin zu einer großen Kraftbelastung der Gewindezapfen. Der dadurch bedingte erhöhte Verschleiß der Gewindezapfen gefährdet auch die mechanisch stabile Fixierung der Sitzschale. Die Sicherheit des einsitzenden Kindes ist auf Dauer nicht gewährleistet.

Aus US-A-4 743 063 und aus EP-A-0 013 233 sind dem Oberbegriff des Anspruchs 1 entsprechende Kindersitze bekannt, die auf ein Untergestell aufgesetzt werden und während des Aufsetzvorganges selbsttätig ihre Sollpositionslage gegenüber dem Untergestell erreichen. Zu diesem Zweck sind am Kindersitz Führungselemente angeordnet, welche mit Führungselementen des Untergestells zusammenwirken. Beim Absenken bzw. Aufsetzen des Kindersitzes auf das Untergestell greifen die miteinander zusammenwirkenden Führungselemente ineinander ein. Ein am Untergestell angebrachtes Riegelschloß ermöglicht es, daß der Kindersitz in seiner Sollpositionslage mit dem Untergestell fixiert verbunden ist. Nachteilig an diesen Kindersitzen ist die Ausgestaltung der dem Untergestell zugeordneten Führungselemente. In US-A-4 743 063 ist das im wesentlichen aus einem Schlitz und einem Führungssteg bestehende Führungselement entweder aufwendig innerhalb des Untergestells eingearbeitet oder als separates Bauteil an einer Rohrstrebe des Untergestells befestigt. Als separates Bauteil ist das Führungselement äußeren Krafteinwirkungen ausgesetzt. Dadurch ist das Bauteil verstärkt mechanischen Beschädigungen ausgesetzt. Außerdem ist die Gefahr groß, daß die Positionierung des Bauteils gegenüber dem Untergestell in unerwünschter Weise verändert wird. Der Kindersitz kann dann beim Aufsetzen auf das Untergestell nicht mehr seine ordnungsgemäße Sollpositionslage einnehmen. Ferner ist der Öffnungsquerschnitt des Schlitzes im Verhältnis zum gesamten Untergestell sehr klein, so daß der Bediener den Kindersitz während des Aufsetzvorganges äußerst genau absenken muß.

In EP-A-0 013 233 ist an der Unterseite des Kindersitzes ein Vorsprung angeformt, der beim Absenken des Kindersitzes etwa formschlüssig in eine Ausmuldung des Untergestells eingreift. Das Zusammenwirken der Ausmuldung mit dem Kindersitzvorsprung erfordert eine exakte Formgebung der Ausmuldung. Dies verkompliziert die Herstellung des Untergestells. Da die Ausmuldung von außen frei zugänglich ist, können deren Oberflächen leicht beschädigt werden. Die erwünschte ortsfeste Fixierung des Kindersitzes in einer Sollpositionslage auf dem Untergestell ist deshalb im Laufe der Betriebszeit nicht gewährleistet.

Ausgehend von diesen Nachteilen liegt der Erfindung die Aufgabe zugrunde, einen Sitz der eingangs genannten Art so auszugestalten, daß er in einfacher Weise mit den unterschiedlichsten Zwecken dienenden Untergestellen verbindbar ist, um dadurch einen Multifunktionssitz zu schaffen. Diese Aufgabe wird durch die Merkmalskombination des Anspruches 1 gelöst.

Diese Lösung sieht das Vorhandensein von Mitteln vor, die gewissermaßen ein "Andocken" bzw. "Aufdocken" des Sitzes an bzw. auf ein Untergestell durch einfaches Absenken in eine Aufsetzstellung ermöglichen, ohne daß dazu komplizierte Handreichungen erforderlich sind.

Die erfindungsgemäße Ausbildung der Andockeinrichtung ist Gegenstand des Anspruches 1.

Durch Anspruch 1 ist der Fixierzapfen integrierter Bestandteil des Untergestells. Er kann damit auch Bestandteil des das Untergestell bildenden Strebengerüstes sein. Damit ist es möglich, eine von Hause aus der Stabilität des Untergestells dienende Strebe mit der weiteren Funktion der Lagefixierung des Sitzes auszustatten. Durch ihre Winkelform gewinnt das Untergestell nur noch eine zusätzliche Stabilisierung.

Die Ausführungsart nach Anspruch 2 verhindert ein ungewolltes Lösen der Lagefixierung zwischen Sitz und Untergestell.

Die Ausführungsart nach Anspruch 3 dient der einfachen Sicherstellung der Lagefixierung ohne zusätzliche Handreichungen. Das Einrastgeräusch des systemgemäß selbsttätig einrastenden Federrastgesperres zeigt der Bedienungsperson an, daß die Aufsetzstellung und damit die gegenseitige Lagefixierung zwischen Sitz und Un tergestell erreicht sind. Dies ist ein nicht zu unterschätzendes Sicherheitsmerkmal.

Durch die Merkmale der Ansprüche 4 bis 7 wird eine möglicherweise von der Gestaltung der Fixiereinrichtung am Untergestell ausgehende Verletzungsgefahr minimiert. Die für die praktisch automatische Lagefixierung zwischen Untergestell und Sitz am Untergestell vorgesehenen Mittel sind mit geringem technischen Aufwand abgerundet. Verletzungsgefahren hervorrufende scharfe Ecken oder Kanten sind vermieden. Die Handhabung, z.B. das Tragen des Untergestells, ist erleichtert.

Die Ausführungsart nach Ansprüchen 8 bis 11 erleichtern das Aufdocken des Sitzes auf das Untergestell. Von oben her, nämlich auf der Seite des Zugriffsbereiches, insbesondere durch das Kind, ist die Tasche nicht zugänglich. Daher ist beim Aufdocken des Sitzes auf das Untergestell eine Verletzungsgefahr für das Kind vollständig vermieden. Wegen der großen Öffnungslänge der Tasche und ihrer eindeutigen Ausrichtung durch Lage in einer Vertikalebene bereitet es der Bedienungsperson keine Schwierigkeit, den Sitz vor seinem Absenken in Richtung auf das Untergestell in eine solche Überdeckungsstellung zu den Fixiermitteln des Untergestells zu bringen, daß anschließend ein bloßes Absenken des Sitzes selbsttätig in die Aufsetzstellung mit der selbsttätigen Lagefixierung führt. Dafür sorgen der konische Verlauf des Hohlraumes der Zapfenaufnahme und die vorhandenen Führungsschrägen, die einerseits durch die Winkelstellung zwischen den Fixierstrebenschenkeln, andererseits aber auch durch deren Oberflächenrundung in ihrer Funktion gewährleistet sind. Diese Rundungen sind die zwangsläufige Folge u.a. der Verwendung eines Rohrprofils für die Untergestellstreben.

Die Ausführungsart nach Anspruch 12 ermöglicht eine vorteilhaft tiefe Lage des Schwerpunktes des Kindersitzes zwischen den beiden Fixierstreben des Untergestells. Wenn hier zwischen dem Sitz selbst und einem Sitzhalter differenziert wird, so ist dies ohne prinzipielle Bedeutung. Es besteht nämlich die Möglichkeit, den kompletten Sitz einstückig oder aus fest miteinander verbundenen Teilen, also im wesentlichen als Sitzschale, auszugestalten. Vielfach ist aber die Sitzschale schwenkbar und in unterschiedlichen Schwenkstellungen fixierbar an einem Sitzhalter angeordnet. Dadurch kann der Sitz auch in eine Schlafstellung für das Kind überführt werden. Bei solchen Sitzen mit schwenkbarer Sitzschale ist es zweckmäßig, diese Schwenkfunktion auch für solche Fälle beizubehalten, in denen der Sitz beispielsweise auf ein Untergestell zur Bildung eines Hochsitzes aufgesetzt ist.

Anspruch 13 kennzeichnet eine einfache, kostengünstig herstellbare Ausführung.

Nach Anspruch 14 läßt sich die Überdeckungsstellung zwischen Sitz und Untergestell zur Einleitung des Absenkens besonders leicht auffinden.

Die Ausführungsart nach Anspruch 15 erleichtert das Abheben des Sitzes vom Untergestell.

Die Ausführungsart nach Anspruch 16 bewirkt eine zusätzliche Sicherheit gegen ungewollte und unkontrollierte Verschiebungen des Sitzhalters bei versehentlichem Lösen des Riegelgesperres.

Der Gegenstand der Erfindung wird anhand von in den Figuren dargestellten Ausführungsbeispielen erläutert. Es zeigen:
- Fig. 1: eine perspektivische Darstellung des Sitzhalters,
- Fig. 2: eine perspektivische Darstellung des Untergestells,
- Fig. 3: eine Ansicht des Untergestells entsprechend der Pfeilrichtung III in Fig. 2,
- Fig. 4: eine Teildarstellung des Fixierzapfens in einer Seitenansicht entsprechend dem Schnitt IV-IV in Fig. 2,
- Fig. 5: eine Darstellung des Fixierzapfens entsprechend Fig. 4, jedoch mit aufgesetztem, teilweise dargestellten Sitzhalter,
- Fig. 6: die perspektivische Darstellung eines aus einem Sitzhalter und einer Sitzschale bestehenden Sitzes,
- Fig. 7: die perspektivische Darstellung einer weiteren Ausführungsform des Untergestells,
- Fig. 8: die perspektivische Darstellung einer weiteren Ausführungsform des Untergestells.

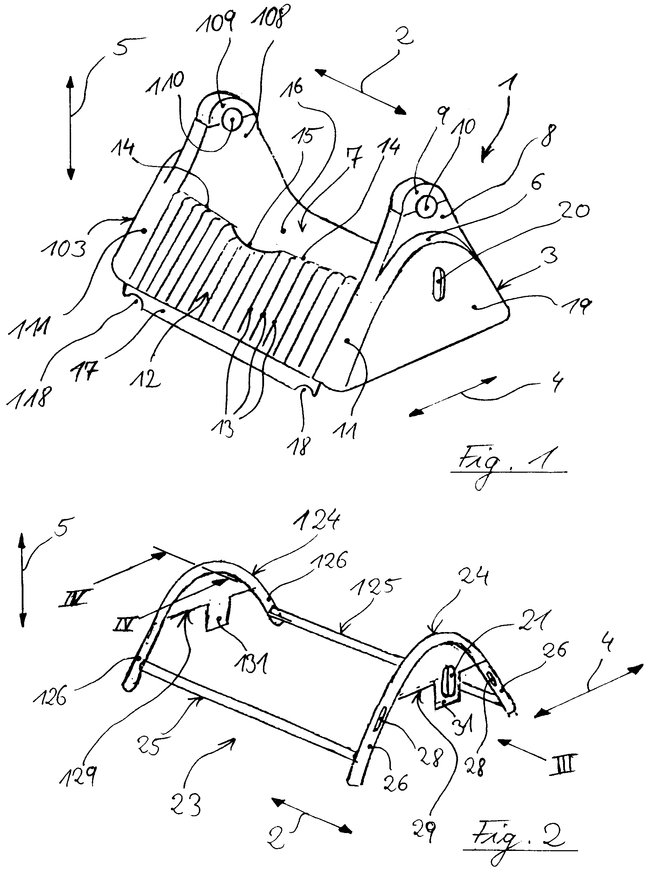

Der in Fig. 1 dargestellte Sitzhalter 1 bildet einen Teil des gesamten Sitzes. Der Sitzhalter 1 ist in einer Längsrichtung 2 betrachtet von zwei Zapfenaufnahmen 3,103 begrenzt. Die beiden Zapfenaufnahmen 3,103 verlaufen im wesentlichen parallel zueinander und sind etwa in einer durch eine Querrichtung 4 und eine Höhenrichtung 5 aufgespannten Ebene einstückig am Sitzhalter 1 angeordnet. Die beiden Zapfenaufnahmen 3,103 haben in Blickrichtung der Längsrichtung 2 gesehen etwa die Form eines Teiles eines Kreissegments. Der mittlere Bereich ist jedoch erheblich stärker gekrümmt als die beiden äußeren gegenüber der Höhenrichtung 5 geneigt verlaufenden äußeren Bereiche. Der Punkt mit der größten Krümmung entspricht der Stelle der größten Erstreckung der Zapfenaufnahme 3 in Höhenrichtung 5 und ist als Krümmungsstelle 6 bezeichnet. Die Zapfenaufnahmen 3,103 sind in Blickrichtung der Längsrichtung 2 betrachtet symmetrische Teile mit einer parallel zur Höhenrichtung 5 verlaufenden und die Krümmungsstelle 6 schneidenden Symmetrieachse.

Der Sitzhalter 1 ist in Blickrichtung der Querrichtung 4 ebenfalls symmetrisch mit einer parallel zur Höhenrichtung 5 angeordneten Symmetrieachse. Diese gedachte Symmetrieachse ist außerdem lotrecht zu dem als Zentralkörper 7 wirksamen mittleren Bereich des Sitzhalters 1 angeordnet.

Im Bereich der Krümmungsstelle 6 ist an die Zapfenaufnahme 3 eine Stützverlängerung 8 einstückig angeformt. Sie ist in Längsrichtung 2 in Richtung auf den Zentralkörper 7 gegenüber der Zapfenaufnahme 3 versetzt angeordnet. In Blickrichtung der Längsrichtung 2 betrachtet hat die Stützverlängerung die Außenkonturen eines Kegelstumpfes mit einer vom Zentralkörper 7 in Höhenrichtung 5 weggerichtet gedachten Kegelspitze. Im Bereich der gedachten Kegelspitze ist die Stützverlängerung 8 in Höhenrichtung 5 um eine Klemmbacke 9 erweitert. Die Klemmbacke 9 ist nach Art eines Halbringes ausgestaltet. Sie ist einstückig an der Stützverlängerung angeformt, kann aber auch durch nicht dargestellte Halte- und Befestigungsmittel mit der Stützverlängerung 8 lösbar verbunden sein. Die Klemmbacke 9 ist mit ihrer Konvexseite der Stützverlängerung 8 abgewandt.

Aufgrund der Ausgestaltung und Anordnung von Zapfenaufnahme 3, Stützverlängerung 8 und Klemmbacke 9 hat der Sitzhalter 1 in Blickrichtung der Längs richtung 2 betrachtet die Form eines gleichschenkeligen Dreiecks mit einer abgerundeten Dreieckspitze im Bereich der Klemmbacke 9.

Die Stützverlängerung 8 ist an ihrer der Klemmbacke 9 zugewandten Oberfläche in Blickrichtung der Längsrichtung 2 halbkreisförmig ausgespart. Diese Aussparung ist durch die Anordnung der der Stützverlängerung 8 zugewandten Oberfläche der Klemmbacke 9 zu einer zylindrischen Fixieröffnung 10 ergänzt. Mit Hilfe der Fixieröffnung 10 kann z.B. ein nicht dargestellter Tragebügel am Sitzhalter 1 befestigt werden.

Die in Blickrichtung der Längsrichtung 2 konischen Außenkonturen von Zapfenaufnahme 3 und Stützverlängerung 8 überdecken sich in ihrem der Krümmungsstelle 6 abgewandten Bereich. In diesem Bereich haben Stützverlängerung 8 und Zapfenaufnahme 3 in Blickrichtung der Querrichtung 4 betrachtet eine gemeinsame, als Verbundfläche 11 wirksame Außenfläche. Die Ausdehnung der Verbundfläche 11 in Längsrichtung 2 ist etwa doppelt so groß wie die entsprechende Ausdehnung der Oberfläche der Zapfenaufnahme 3 im Bereich der Krümmungsstelle 6.

Wegen der Symmetrie des Sitzhalters 1 sind in Längsrichtung 2 eine weitere Stützverlängerung 108 und eine Klemmbacke 109 vorhanden. Hinsichtlich Anordnung und Ausgestaltung gilt für sie analog das oben Genannte.

Die beiden in Fig. 1 dargestellten Verbundflächen 11,111 sind in Längsrichtung 2 durch eine Rippenfläche 12 einstückig miteinander verbunden. Die Rippenfläche 12 hat entlang der Höhenrichtung 5 den gleichen Neigungswinkel wie die Verbundflächen 11,111. An der Rippenfläche 12 sind parallel zu dessen Neigungswinkel verlaufende, streifenartige und als Rippen 13 wirksame Erhebungen einstückig angeordnet. Der Abstand der Rippen 13 in Längsrichtung 2 ist konstant. Die Rippenfläche 12 verbessert somit die Griffigkeit und Handhabung des Sitzhalters 1.

Die in Längsrichtung 2 verlaufende, den Klemmbacken 9,109 zugewandte und als eine Begrenzungskante 14 wirksame Außenkante der Rippenfläche 12 ist in Höhenrichtung 5 leicht durchgebogen. Dabei ist die Konkavseite den Klemmbacken 9,109 zugewandt. In Längsrichtung 2 ist die Begrenzungskante 14 in der Mitte von einer kreisbogenförmigen Fixieraussparung 15 unterbrochen. Die Konkavseite der Fixieraussparung 15 ist den Klemmbacken 9,109 zugewandt.

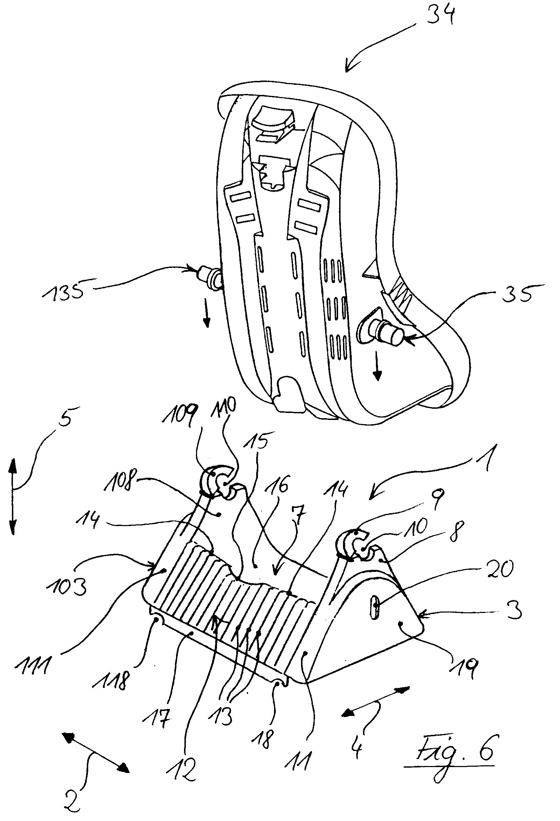

Die Fixieraussparung 15 dient z.B. der Fixierung einer Außenfläche eines in den Sitzhalter 1 einzusetzenden Sitzelementes (Fig. 6).

Die Begrenzungskante 14 und die einander zugewandten Oberflächen der Stützverlängerungen 8,108 sind miteinander durch die Oberfläche einer innerhalb des Zentralkörpers 7 angeordneten Fixiermulde 16 einstückig verbunden. Die Fixiermulde 16 ist gegenüber der Begrenzungskante 14 in Höhenrichtung 5 vertieft angeordnet. In die Fixiermulde 16 wird z.B. ein Sitzelement eingesetzt (Fig. 6).

An die der Begrenzungskante 14 in Höhenrichtung 5 gegenüberliegende Außenkante der Rippenfläche 12 ist einstückig eine Fixierleiste 17 angeformt. Die Fixierleiste 17 erstreckt sich in Längsrichtung 2. Die Ausdehnung der Fixierleiste 17 in Längsrichtung 2 ist etwas größer als die entsprechende Ausdehnung der Rippenfläche 12, so daß die Endbereiche der Fixierleiste 17 einstückig an die Verbundflächen 11,111 angeformt sind.

Die Fixierleiste 17 ist gegenüber der Rippenfläche 12 in Querrichtung 4 abgeknickt. Dabei ist der Neigungswinkel der Fixierleiste gegenüber der Höhenrichtung 5 kleiner als der entsprechende Neigungswinkel der Rippenfläche 12.

In den den Verbundflächen 11 zugewandten Endbereichen ist die Fixierleiste 17 jeweils etwa halbkreisförmig ausgespart. Die Aussparungen wirken jeweils als Strebenfixierung 18. Dadurch kann der Sitzhalter 1 z.B. an einem gerüstähnlichen Aufbau (Fig. 8) fixiert werden.

Die etwa kreissegmentförmige Aufnahmewand 19 der Zapfenaufnahme 3 ist in Längsrichtung 2 von einer Sperrkörperaufnahme 20 durchbrochen. Die Sperrkörperaufnahme 20 ist ein in Höhenrichtung 5 verlaufender Längsschlitz. Ihre gedachte Verlängerung schneidet lotrecht die Krümmungsstelle 6. In die Sperrkörperaufnahme 20 kann ein Sperrkörper 21 (Fig. 2) einrasten.

Die Aufnahmeaußenfläche 19, die Verbundfläche 11 und die daran sich anschließende Oberfläche mit der Krümmungsstelle 6 begrenzen mit ihren Innenflächen einen Aufnahmehohlraum 22 (Fig. 5). Der Aufnahmehohlraum 22 ist derart dimensioniert, daß beim Aufsetzen des Sitzhalters 1 in Höhenrichtung 6 auf ein zugehöriges Untergestell 23 eine formschlüssige Verbindung zwischen der Zapfenaufnahme 3 und einem Fixierzapfen 24 (Fig. 2) entsteht.

Das Untergestell 23 enthält zwei Fixierzapfen 24,124. Die Fixierzapfen 24,124 sind durch zwei in Längsrichtung 2 verlaufende Verbindungsrohre 25,125 miteinander verbunden. Die beiden Verbindungsrohre 25,125 sind in einer durch die Längsrichtung 2 und die Querrichtung 4 aufgespannten Ebene angeordnet. In einer dazu senkrechten Ebene sind die beiden Fixierzapfen 24,124 angeordnet.

Die beiden Verbindungsrohre 25,125 bewirken zwischen den beiden Fixierzapfen 24,124 einen definierten Abstand. Sie verbessern außerdem die Stabilität des Untergestells 23.

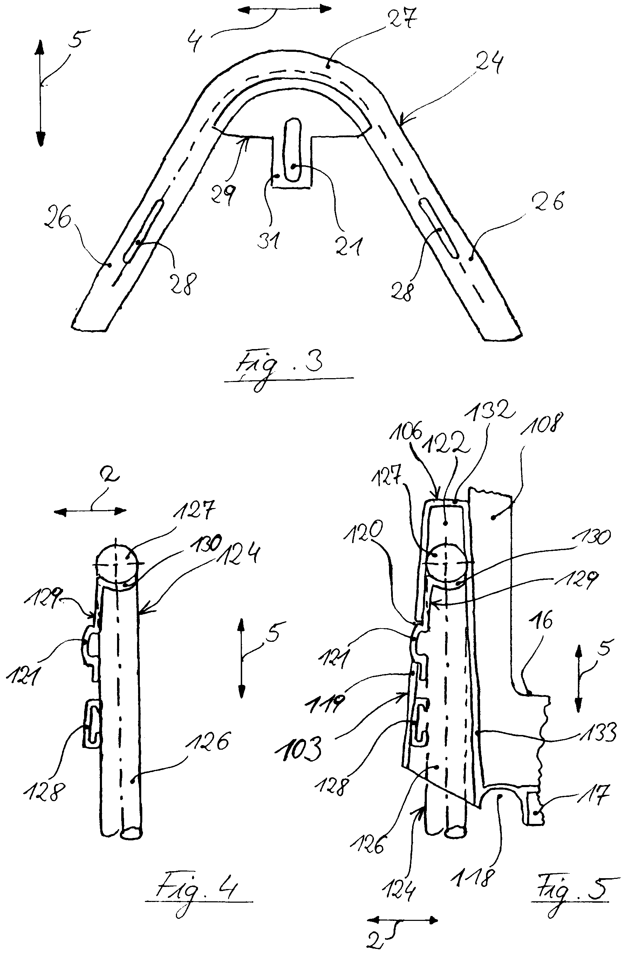

In Fig. 3 ist erkennbar, daß der Fixierzapfen 24 aus zwei Zapfenschenkeln 26 und einem diese verbindenden Biegebereich 27 besteht.

Der Fixierzapfen 24 ist ein symmetrisches Teil mit einer zur Höhenrichtung 5 parallelen und durch den Sperrkörper 21 verlaufenden Symmetrieachse.

Der Neigungswinkel der Zapfenschenkel 26 gegenüber der Höhenrichtung 5 ist an die Neigung der Verbundflächen 11 der zugehörigen Zapfenaufnahme 3 angepaßt. Die beiden Zapfenschenkel 26 bilden die Schenkel eines spitzen Winkels mit einer gedachten, den Freienden der Zapfenschenkel 26 in Höhenrichtung 5 abgewandt angeordneten Winkelspitze.

Im Bereich der Freienden der Zapfenschenkel 26 sind die Verbindungsrohre 25,125 befestigt, z.B. angeschweißt. Analoges gilt für die Zapfenschenkel 126 und die Verbindungsrohre 25,125 (Fig. 2).

An den Freienden der Zapfenschenkel 26,126 können z.B. in den Figuren nicht dargestellte Gummifüße befestigt sein. Dadurch wird die Haftung und die Lagefixierung des Untergestells 23 auf einem Untergrund verbessert. Dies dient außerdem der Sicherheit der Benutzerperson.

An jedem Zapfenschenkel 26,126 ist jeweils ein Spannelement 28,128 angeformt. Die Spannelemente 28,128 sind an der Oberfläche des jeweiligen Zapfenschenkels 26,126 angeordnet und überstehen die Ausdehnung des jeweiligen Zapfenschenkels 26,126 in Längsrichtung 2. An der Oberfläche der Zapfenschenkel 26,126 selbst erstrecken sich die Spannelemente 28,128 im wesentlichen in Richtung des Neigungswinkels der Zapfenschenkel 26,126. Die Spannelemente 28,128 dienen der zusätzlichen Führung des Sitzhalters 1 nach dem Abheben vom Untergestell 23 sowie der verbesserten Fixierung des Sitzhalters 1 in seiner Sollpositionlage. Die Spannelemente 28,128 sind vorzugsweise aus elastischem Kunststoff hergestellt.

Aus Fig. 4 ist ersichtlich, daß der Sperrkörper 121 einstückig als Erhebung an einer Sperrplatte 129 angeformt ist. Der Sperrkörper 121 übersteht die Sperrplatte 129 in Längsrichtung 2. Der Sperrkörper 121 ist derart dimensioniert, daß Sperrkörperaufnahme 120 und Sperrkörper 121 bei Erreichen der Sollpositionlage des Sitzhalters 1 formschlüssig miteinander verrasten können (Fig. 5). Die Sperrplatte 129 ist gegenüber dem als rohraritge Strebe ausgestalteten Fixierzapfen 124 in Längsrichtung 2 abgewinkelt (Fig. 4). Dadurch ergibt sich ein Neigungswinkel der Sperrplatte 129 gegenüber der Höhenrichtung 5.

Das Spannelement 128 ist gegenüber dem Freiende der Sperrplatte 129 in Höhenrichtung 5 versetzt am Zapfenschenkel 126 angeordnet. Das Spannelement 128 hat in Fig. 4 die Umrißgestalt eines C. Mittels der beiden Freienden ist das C-förmige Spannelement 128 am Zapfenschenkel 126 fixiert. Der die beiden C-Freienden verbindende längliche Bereich des Spannelementes 128 verläuft etwa in Höhenrichtung 5, ist aber ähnlich der Sperrplatte 129 gegenüber der Höhenrichtung 5 leicht geneigt.

Die Sperrplatte 129 ist an ihrem dem Biegebereich 127 des Fixierzapfens 124 zugewandten Ende etwa in Längsrichtung 2 verlaufend sichelförmig als eine Plattenhalterung 130 erweitert. Die Plattenhalterung 130 ist mit ihrer Konkavseite der Oberfläche des Biegebereiches 127 zugewandt und an dieser Oberfläche lagefixiert.

Die obigen Ausführungen bezüglich Sperrkörper 121, Sperrplatte 129, Plattenhalterung 130 und Spannelement 128 gelten analog für die entsprechenden Teile am Fixierzapfen 24.

Sperrplatte 129 und Plattenhalterung 130 sind einstückig hergestellt. Sie können z.B. aus metallischem Werkstoff bestehen. Die Plattenhalterung 130 ist dann vorzugsweise mit dem Biegebereich 127 verschweißt.

Die Sperrplatte 29 ist in Fig. 3 in ihrem dem Biegebereich 27 zugewandten Flächenbereich etwa halbkreisförmig ausgestaltet. Die Krümmung des Kreisbogens der halbkreisförmigen Fläche ist an die Krümmung des Biegebereichs 27 derart angepaßt, daß die der Sperrplatte 29 zugehörigen, jedoch in Fig. 3 nicht darstellbaren Plattenhalterung analog der Plattenhalterung 130 an den Biegebereich 127 fixierbar ist. Der Durchmesser des halbkreisförmigen Flächenanteils der Sperrplatte 29 verläuft parallel zur Querrichtung 4. Die Sperrplatte 29 ist im mittleren Bereich der parallel zur Querrichtung 4 verlaufenden Außenkante durch einen rechteckigen Plattensteg 31 verlängert. Die Längsseite des Plattensteges 31 verläuft parallel zur Höhenrichtung 5. Im Bereich des Steges 31 ist der Sperrkörper 21 angeordnet. Der Sperrkörper 21 verläuft in seiner Längserstreckung in Höhenrichtung 5 auf den Biegebereich 27 zugewandt. Der dem Biegebereich 27 zugewandte Endbereich des Sperrkörpers 21 ist an dem halbkreisförmigen Flächenanteil der Sperrplatte 29 angeordnet.

In Fig. 5 befinden sich die Zapfenaufnahme 103 und der Fixierzapfen 124 in ihrer Aufsetzstellung.

Die Umrißgestalt der Zapfenaufnahme 103 sowie sein Aufnahmehohlraum 122 sind in Höhenrichtung 5 konisch geformt. Hierbei ist der Aufnahmehohlraum 122 vom Zapfenschenkel 126 ausgehend in Richtung des Biegebereiches 127 verjüngt. Der Aufnahmehohlraum 122 erstreckt sich in Höhenrichtung 5 über den Biegebereich 127 hinaus. In diesem Bereich ist der Aufnahmehohlraum 122 durch eine in Längsrichtung 2 angeordnete Begrenzungswand 132 begrenzt. An der Begrenzungswand 132 befindet sich die Krümmungsstelle 106. Die Begrenzungswand 132 verbindet die Aufnahmewand 119 und eine in Längsrichtung 2 gegenüberliegende Aufnahmeseitenwand 133 miteinander.

Die Aufnahmewand 119 ist gegenüber der Höhenrichtung 5 stärker geneigt als die Aufnahmeseitenwand 133. Dies ist notwendig, um die Dimensionen des Sperrkörpers 121 und des Spannelementes 128 sowie deren Eigenschaften als Teile von Gesperren zu berücksichtigen. Die Aufnahmeseitenwand 133 ist gegenüber der Aufnahmewand 119 in Höhenrichtung 5 verlängert. Im Bereich dieser Verlängerung befindet sich auch die Öffnung des Aufnahmehohlraumes 122. An den dem Zapfenschenkel 126 zugewandten Endbereich der Aufnahmeseitenwand 133 schließt sich die Strebenfixierung 118 an.

An die dem Hohlraum 122 abgewandte Außenfläche der Aufnahmeseitenwand 133 schließt sich einstückig die Stützverlängerung 108 an.

Während die Öffnung der Zapfenaufnahme 103 gegenüber dem Rohrdurchmesser des Fixierzapfens 124 in Längsrichtung 2 verbreitert ist, ist der davon in Höhenrichtung 5 gegenüberliegende Endbereich des Aufnahmehohlraumes 122 gegenüber dem konstanten Rohrdurchmesser des Fixierzapfens 124 verengt.

Aufnahmewand 119 und Aufnahmeseitenwand 133 sowie die Zapfenschenkel 126 und die an deren Verlauf angepaßte Innenseiten der Verbundflächen 111 wirken durch ihren gegenüber der Höhenrichtung 5 geneigten Verlauf als Führungsschrägen und erleichtern die Führung des Sitzhalters 1 während des Aufsetzvorganges auf das Untergestell 23.

Die gegenüber dem Rohrdurchmesser des Fixierzapfens 124 verbreiterte Öffnung der Zapfenaufnahme 103 sowie die Oberflächenrundung des rohrartigen Fixierzapfens 124 vermeiden ein Verkanten von Zapfenaufnahme 103 und Fixierzapfen 124 zu Beginn des Aufsetzvorganges und erleichtern das Aufsetzen zusätzlich.

Die Sperrplatte 129 ist gegenüber der Höhenrichtung 5 derart geneigt, daß der Sperrkörper 121 während des Aufsetzvorganges gegen die Innenseite der Aufnahmewand 119 eine Druckkraft in Längsrichtung 2 ausübt. Die Zapfenaufnahme 103 wird während des Aufsetzvorganges in Höhenrichtugn 5 auf die Zapfenschenkel 126 hin gerichtet verschoben. Sobald die Sperrkörperaufnahme 120 die Position des Sperrkörpers 121 erreicht, verrasten Sperrkörperaufnahme 120 und Sperrkörper 121 formschlüssig miteinander aufgrund der Vorspannung der Sperrplatte 129 in Längsrichtung 2. Zapfenaufnahme 103 und Fixierzapfen 124 wirken dadurch als Riegelgesperre zusammen. Der prinzipielle Aufbau und die Funktion eines derartigen Riegelgesperres ist aus **O**. **RICHTER, R.v.VOSS, F.KOZER, Bauelemente der Feinmechanik, VEB Verlag Technik, Berlin, 1964**^{**9**}**, S. 262 ff.** bekannt.

Das Riegelgesperre kann nur durch eine auf den Sperrkörper 121 in Längsrichtung 2 ausgeübte Druckkraft wieder gelöst werden.

Die Sperrplatte 129 und das Spannelement 128 liegen während der Aufsetzstellung der Zapfenaufnahme 103 mit Vorspannung in Längsrichtung 2 an der Innenseite der Aufnahmewand 119 an. Die beiden am Fixierzapfen 124 angeordneten Spannelemente 128 sowie die Zapfenaufnahme 103 wirken dadurch als Bremsgesperre zusammen. Ein derartiges Bremsgesperre ist ebenfalls aus der obengenannten Literaturstelle bekannt.

Die Spannelemente 128 und die Sperrplatte 129 verbessern die Führung des Sitzhalters 1 während des Aufsetzvorganges.

In Fig. 6 besteht der vollständige Sitz aus dem Sitzhalter 1 und einer Sitzschale 34.

Die Ausgestaltung der Begrenzungskante 14, Fixieraussparung 15, Stützverlängerungen 8,108 und der Fixiermulde 16 ermöglichen eine formschlüssige Einbettung der Sitzschale 34 innerhalb des Zentralkörpers 7 des Sitzhalters 1. Zwei im Bereich der Armlehnen der Sitzschale 34 angeordnete Drehachsen 35,135 werden innerhalb der Fixieröffnungen 10,110 fixiert. Hierzu lassen sich die Klemmbacken 9,109 von einer Öffnungsstellung (Fig. 6) in eine Schließstellung überführen. Schließelemente zur Lagefixierung der Klemmbacken 9,109 sind hier nicht dargestellt.

Die Rotationsachse der Drehachsen 35,135 erstreckt sich in Längsrichtung 2.

Die Verwendung der Sitzschale 34 in Verbindung mit dem Sitzhalter 1 eignet sich vor allem dann, wenn die Sitzschale 34 in unterschiedliche Schwenkstellungen überführbar sein soll. Hierzu lassen sich die in den Fixieröffnungen 10,110 einliegenden Drehachsen 35,135 durch in Fig. 6 nicht dargestellte Befestigungsmittel lösbar verrasten.

Es ist auch denkbar, die Klemmbacken 9,109 permanent in einer Position entsprechend Fig. 1 zu belassen. Die Drehachsen 35,135 sind dann lösbar an der Sitzschale 34 angeordnet. Zur Drehfixierung der Sitzschale 34 an dem Sitzhalter 1 durchgreifen die Drehachsen 35,135 die Fixieröffnungen 10,110 und werden an entsprechenden Bohrungen der Sitzschale 34 fixiert.

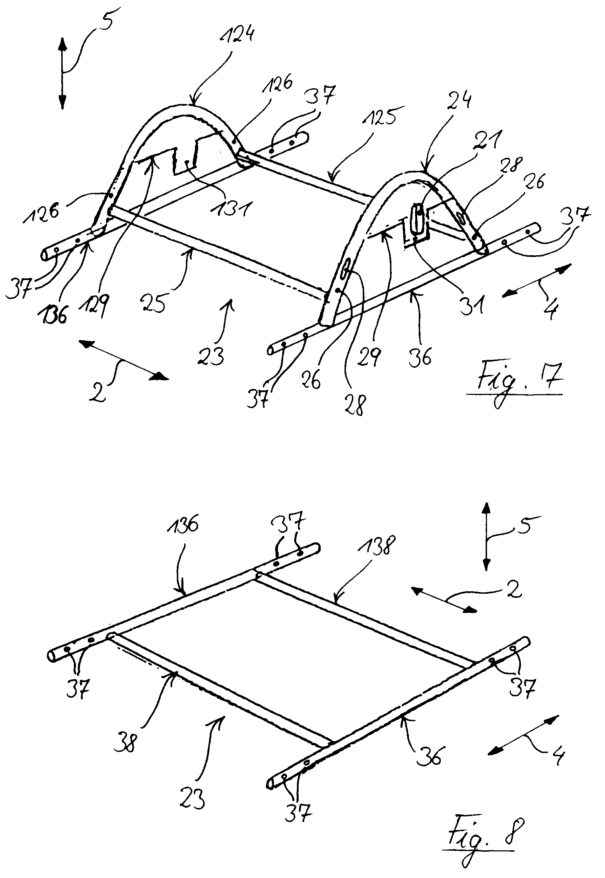

Die Ausführungsform des Untergestells 23 in Fig. 7 entspricht im wesentlichen der Ausführungsform des Untergestells 23 in Fig. 2.

Die Freienden der Zapfenschenkel 26 bzw. 126 sind jedoch jeweils durch eine Verlängerungsstrebe 36 bzw. 136 miteinander verbunden. Die Verlängerungsstreben 36,136 sind in Querrichtung 4 angeordnet. Die Verbindung zwischen Verlängerungsstrebe 36 und den Zapfenschenkeln 26 bzw. zwischen der Verlängerungsstrebe 136 und den Zapfenschenkeln 126 kann z.B. durch eine Schweißung hergestellt sein. Die rohrartigen Verlängerungsstreben 36,136 überstehen die zugehörigen Zapfenschenkel 26,126 in Querrichtung 4 zu gleichen Teilen. Die überstehenden Bereiche der Strebenverlängerungen 36,136 enthalten jeweils zwei Rastlöcher 37. Die Rastlöcher 37 durchbrechen die Verlängerungsstreben 36,136 in Längsrichtung 2. Dadurch kann das Untergestell 23 an weiteren, gerüstähnlichen Aufbauten fixiert werden. Außerdem ist die Nutzung des Sitzes mit einem derartigen Untergestell 23 auf einem Fahrgestell als Stubenfahrzeug, als Kinderkarre oder als Kindersitz- bzw. -hochstuhl erleichtert.

Das in Fig. 8 erkennbare Untergestell 23 eignet sich, wenn eine Fixierung des Sitzhalters 1 an den Strebenfixierungen 18,118 ausreicht. Der Sitzhalter 1 wird in Höhenrichtung 5 auf das Untergestell 23 abgesenkt. Während der Aufsetzstellung tangieren die Strebenfixierungen 18,118 mit ihrer Konkavseite die Oberfläche der Verlängerungsstreben 36,136.

Um den Sitzhalter 1 gegenüber dem Untergestell 23 rutschfester zu gestalten, können die Strebenfixierungen 18,118 von einem besonderen Kunststoff umgeben sein.

Der Sitzhalter 1 ist üblicherweise vollständig aus Kunststoff hergestellt. Dadurch ist der Sitzhalter 1 problemlos transportierbar. Außerdem ist sein Eigengewicht bei der Berücksichtigung der Stabilität des Untergestells 23 vernachlässigbar.

Bei dem Untergestell 23 in Fig. 8 werden zwei analog Fig. 7 angeordnete und ausgestaltete Verlängerungsstreben 36,136 verwendet. Ein definierter Abstand zwischen den beiden Verlängerungsstreben 36 und 136 in Längsrichtung 2 wird durch zwei Abstandsrohre 38,138 hergestellt. Die Abstandsrohre 38,138 sind in Längsrichtung 2 angeordnet. Die Verbindungen zwischen den Abstandsrohren 38,138 und den Verlängerungsstreben 36,136 sind üblicherweise durch Verschweißungen hergestellt. Das Untergestell 23 hat etwa die Form einer Leiter mit den Abstandsrohren 38,138 als zwei Stufen. Die Abstandsrohre 38,138 und die mittleren Bereiche der Verlängerungsstreben 36,136 bilden zusammen ein Rechteck. Die mit den Rastlöchern 37 versehenen Endbereiche der Verlängerungsstreben 36,136 überstehen das Rechteck in Querrichtung 4.

Bei einem Untergestell 23 entsprechend Fig. 8 kann der Sitzhalter 1 in seiner Aufsetzstellung in Querrichtung 4 verfahren werden. Hierbei dient die Fixierleiste 17 als Begrenzungsanschlag für den Verfahrweg. Im Extremfall schlägt die Fixierleiste 17 am Abstandsrohr 38 bzw. 138 an. Somit ist der maximale Verfahrweg durch den Abstand der beiden Abstandsrohre 38,138 festgelegt. Das Untergestell 23 in Fig. 8 wirkt als Schiene. Dadurch kann einerseits die Position des Sitzes bequem verändert werden. Andererseits wird durch die Verwendung der Abstandsrohre 38,138 ein unbegrenzter Verfahrweg vermieden, so daß die von einem bewegten Sitzhalter 1 ausgehende Unfallgefahr reduziert ist.

Die Nutzungsmöglichkeiten des Untergestells 23 in Fig. 8 entsprechen den Ausführungen in Fig. 7.

### Bezugszeichenliste

- 1: Sitzhalter
- 2: Längsrichtung
- 3: Zapfenaufnahme
- 4: Querrichtung
- 5: Höhenrichtung
- 6: Krümmungsstelle
- 7: Zentralkörper
- 8: Stützverlängerung
- 9: Klemmbacke
- 10: Fixieröffnung
- 11: Verbundfläche
- 12: Rippenfläche
- 13: Rippe
- 14: Begrenzungskante
- 15: Fixieraussparung
- 16: Fixiermulde
- 17: Fixierleiste
- 18: Strebenfixierung
- 19: Aufnahmewand
- 20: Sperrkörperaufnahme
- 21: Sperrkörper
- 23: Untergestell
- 24: Fixierzapfen
- 25: Verbindugnsrohr
- 26: Zapfenschenkel
- 27: Biegebereich
- 28: Spannelement
- 29: Sperrplatte
- 31: Plattensteg
- 34: Sitzschale
- 35: Drehachse
- 36: Verlängerungsstrebe
- 37: Rastloch
- 38: Abstandsrohr
- 103: Zapfenaufnahme
- 108: Stützverlängerung
- 109: Klemmbacke
- 110: Fixieröffnung
- 111: Verbundfläche
- 118: Strebenfixierung
- 119: Aufnahmewand
- 120: Sperrkörperaufnahme
- 121: Sperrkörper
- 122: Aufnahmehohlraum
- 124: Fixierzapfen
- 125: Verbindungsrohr
- 126: Zapfenschenkel
- 127: Biegebereich
- 128: Spannelement
- 129: Sperrplatte
- 130: Plattenhalterung
- 131: Plattensteg
- 132: Begrenzungswand
- 133: Aufnahmeseitenwand
- 135: Drehachse
- 136: Verlängerungsstrebe
- 138: Abstandsrohr

## Patentansprüche

1. Kindersitz (1,34), insbesondere Kinderfahrzeugsitz, welcher durch Absenken und Aufsetzen auf ein Untergestell (23) mit diesem in einer Sollpositionslage fixiert verbunden ist, wobei am Sitz (1,34) und am Untergestell (23) angeordnete, bei der Absenkbewegung durch Aneinanderlage zusammenwirkende Führungsschrägen (11,111,19,119,26,126) selbsttätig die Erreichung der Sollposition beim Aufsetzen gewährleisten,
dadurch gekennzeichnet,
daß die Führungsschrägen (11,111,19,119,26,126) Bestandteile eines Fixierzapfens (24,124) und einer ihn umgebenden Zapfenaufnahme (3,103) sind, wobei
- der Fixierzapfen (24,124) durch die Schenke (26,126) einer mit ihrer Winkelspitze nach oben stehenden, winkelförmigen Fixierstrebe des Untergestells (23) gebildet ist und
- die Führungsschrägen (11,111,19,119,26,126) in Aufsetzstellung eine Verzapfung zwischen Sitz (1,34) und Untergestell (23) bewirken.

2. Sitz nach Anspruch 1,
gekennzeichnet durch
eine in Aufsetzstellung wirksame Formschlußverbindung zwischen Sitz (1,34) und Untergestell (23), insbesondere zwischen Fixierzapfen (24,124) und Zapfenaufnahme (3,103).

3. Sitz nach Anspruch 2,
dadurch gekennzeichnet,
daß die Formschlußverbindung ein in Aufsetzstellung selbsttätig einrastendes Riegelgesperre ist.

4. Sitz nach Anspruch 1,
dadurch gekennzeichnet,
daß der Winkel kleiner ist als 90°.

5. Sitz nach Anspruch 1 oder 4,
dadurch gekennzeichnet,
daß die Winkelspitze durch Biegung der Fixierstrebe (24,124) gebildet ist.

6. Sitz nach einem der Ansprüche 1 bis 5,
dadurch gekennzeichnet,
daß die Verbindung (127) zwischen den beiden Winkelschenkeln (26,126) kreisbogenartig ausgerundet ist.

7. Sitz nach einem der Ansprüche 1 bis 6,
dadurch gekennzeichnet,
daß die Fixierstrebe (24,124) eine Rohrstrebe ist.

8. Sitz nach einem oder mehreren der vorhergehenden Ansprüche,
dadurch gekennzeichnet,
daß die Fixierstrebenschenkel (26,126) des Untergestells (23) in einer etwa vertikalen Ebene verlaufen.

9. Sitz nach einem oder mehreren der vorhergehenden Ansprüche,
dadurch gekennzeichnet,
daß die Zapfenaufahme (3,103) eine mit ihrer Öffnung nach unten stehende Tasche ist, deren zur Formschlußaufnahme des Zapfens (24,124) dienender Hohlraum (122) eine der Umrißform des Zapfens (24,124) entsprechende Innenkontur aufweist.

10. Sitz nach Anspruch 9,
gekennzeichnet durch
einen konischen Verlauf des Hohlraumes (122).

11. Sitz nach Anspruch 10,
dadurch gekennzeichnet,
daß der Hohlraum (122) im Bereich seiner Öffnung
- die größte Innenkontur aufweist und
- gegenüber der Strebenstärke aufgeweitet ist.

12. Sitz nach einem oder mehreren der vorhergehenden Ansprüche,
dadurch gekennzeichnet,
daß an beiden Außenseiten des Sitzes (34) oder eines Sitzhalters (1) je eine Tasche (3,103) angeordnet ist derart, daß der Sitz (34) oder wenigstens der Sitzhalter (1) in Aufsetzstellung zwischen zwei Fixierstreben (24,124) des Untergestells (23) liegt.

13. Sitz nach einem oder mehreren der vorhergehenden Ansprüche,
dadurch gekennzeichnet,
daß der Sitz (34)und/oder ein Halter (1) mit den Taschen (3,103) einstückig aus Kunststoff geformt sind.

14. Sitz nach Anpruch 12 oder 13,
dadurch gekennzeichnet,
daß die Ebenen der Taschenhohlräume (22,122) und der Fixierstreben (24,124) etwa parallel zueinander und zur vertikalen Mittellängsebene des Sitzes (34) verlaufen.

15. Sitz nach einem oder mehreren der vorhergehenden Ansprüche,
dadurch gekennzeichnet,
daß das Riegelgesperre in Aufsetzstellung innerhalb einer Tasche (22,122) liegend mit einem Sperrkörper (21,121) durch die Außenwand der Tasche (22,122) hindurchsteht derart,
daß das Gesperre durch Druck auf den Sperrkörper (21,121) von außen in eine Freigabestellung zurückdrückbar ist.

16. Sitz nach einem oder mehreren der vorhergehenden Ansprüche,
dadurch gekennzeichnet,
daß an der Fixierstrebe (24,124) ein Sperrelement (28,128) zur Ausbildung eines Bremsgesperres angeordnet ist.

## Claims

1. A child's seat (1,34), in particular a child's seat for a vehicle which, by being lowered and fitted on a base frame (23) is joined thereto fixed in a desired position, in which arrangement slanting guide members (11, 111, 19, 119, 26, 126) arranged on the seat (1, 34) and on the base frame (23), cooperating during the lowering movement by bearing on each other, automatically ensure that the desired position is reached during the fitting,
characterized in that
the slanting guide members (11, 111, 19, 119, 26, 126) are component parts of a fixing peg (24, 124) and of a peg mounting (3, 103) surrounding it, in which arrangement,
- the fixing peg (24, 124) is formed by the arms (26, 126) of an angular fixing member of the base frame (23) pointing upwards with its angular tip, and
- the slanting guide members (11, 111, 19, 119, 26, 126) provide in the fitted position a dowel-type joint between the seat (1, 34) and the base frame (23).

2. A seat according to claim 1,
characterized by
a joint with a form fit between the seat (1, 34) and the base frame (23) that is effective in the fitted position, in particular between the fixing peg (24, 124) and the peg mounting (3, 103).

3. A seat according to claim 2,
characterized in that
the joint with a form fit is a bolt-type interlocking means automatically engaging in the fitted position.

4. A seat according to claim 1,
characterized in that
the angle is smaller than 90°.

5. A seat according to claim 1 or 4,
characterized in that
the angular tip is formed by bending the fixing member (24, 124).

6. A seat according to one of claims 1 to 5,
characterized in that
the connection (127) between the two angle arms (26, 126) is rounded off in the manner of a circular arc.

7. A seat according to one of claims 1 to 6,
characterized in that
the fixing member (24, 124) is a tubular member.

8. A seat according to one or more of the preceding claims,
characterized in that
the arms (26, 126) of the fixing member of the base frame (23) extend in an approximately vertical plane.

9. A seat according to one or more of the preceding claims,
characterized in that
the peg mounting (3, 103) is a pocket with its opening pointing downwards, whose hollow space (122) serving for receiving the fixing peg (24, 124) with a form fit has an inner contour corresponding to the outer contour of the fixing peg (24, 124).

10. A seat according to claim 9,
characterized by
a conical shape of the hollow space (122).

11. A seat according to claim 10,
characterized in that
the hollow space (122) in the zone of its opening,
- has the largest inner contour, and
- is widened as compared with the thickness of the member.

12. A seat according to one or more of the preceding claims,
characterized in that
on both outer sides of the seat (34), or of a seat holder (1), there is arranged one pocket (3, 103) each, in such a way that the seat (34), or at least the seat holder (1), lies in the fitted position between two fixing pegs (24, 124) of the base frame (23).

13. A seat according to one or more of the preceding claims,
characterized in that
the seat (34) and/or a holder (1) is integrally formed with the pockets (3, 103) from a plastic material.

14. A seat according to claim 12 or 13,
characterized in that
the planes of the hollow spaces (22, 122) of the pocket and of the fixing pegs (24, 124) extend approximately parallel to each other and to the vertical median longitudinal plane of the seat (34).

15. A seat according to one or more of the preceding claims,
characterized in that
the bolt-type interlocking means lying in the fitted position within a pocket (22, 122), projects with a locking body (21, 121) through the outer wall of the pocket (22, 122) in such a way that,
the locking means can be pushed back into a releasing position by pressure from the outside on the locking body (21, 121).

16. A seat according to one or more of the preceding claims,
characterized in that
a locking element (28, 128) is arranged on the fixing peg (24, 124) for forming a braking locking means.

## Revendications

1. Siège d'enfants (1, 34), en particulier siège d'enfants pour véhicules, qui est relié par abaissement et dépose sur un châssis de base (23) avec fixation à celui-ci dans une position de consigne, des pentes de guidage (11, 111, 19, 119, 26, 126) agencées sur le siège (1, 34) et sur le châssis de base (23) et coopérant lors du mouvement d'abaissement par appui mutuel assurant automatiquement l'obtention de la position de consigne lors de la dépose, caractérisé en ce que les pentes de guidage (11, 111, 19, 119, 26, 126) font partie d'un tenon de fixation (24, 124) et d'un logement de tenon (3, 103) qui l'entoure, dans lequel :
- le tenon de fixation (24, 124) est formé par les bras (26, 126) d'une traverse de fixation du châssis de base (23), qui est réalisée sous forme en angle et qui dépasse par son sommet d'angle vers le haut, et
- les pentes de guidage (11, 111, 19, 119, 26, 126) procurent en position déposée un assemblage à tenon et mortaise entre le siège (1, 34) et le châssis de base (23).

2. Siège selon la revendication 1, caractérisé par une liaison en coopération de formes efficace en position déposée entre le siège (1, 34) et le châssis de base (23), en particulier entre le tenon de fixation (24, 124) et le logement de tenon (3, 103).

3. Siège selon la revendication 2, caractérisé en ce que la liaison en coopération de formes est un verrouillage à barre avec enclenchement automatique en position déposée.

4. Siège selon la revendication 1, caractérisé en ce que l'angle est inférieur à 90°.

5. Siège selon l'une ou l'autre des revendications 1 et 4, caractérisé en ce que le sommet d'angle est formé par coudage de la traverse de fixation (24, 124).

6. Siège selon l'une quelconque des revendications 1 à 5, caractérisé en ce que la liaison (127) entre les deux bras d'angle (26, 126) est arrondie à la manière d'un arc de cercle.

7. Siège selon l'une quelconque des revendications 1 à 6, caractérisé en ce que la traverse de fixation (24, 124) est une traverse tubulaire.

8. Siège selon l'une ou plusieurs des revendications précédentes, caractérisé en ce que les bras (26, 126) de la traverse de fixation du châssis de base (23) s'étendent dans un plan approximativement vertical.

9. Siège selon l'une ou plusieurs des revendications précédentes, caractérisé en ce que le logement de tenon (3, 103) est une poche avec ouverture dirigée vers le bas, dont la cavité (122) servant au logement en coopération de formes du tenon (24, 124) présente un contour intérieur correspondant au contour extérieur du tenon (24, 124).

10. Siège selon la revendication 9, caractérisé par un tracé conique de la cavité (122).

11. Siège selon la revendication 10, caractérisé en ce que la cavité (122) présente dans la région de son ouverture le contour intérieur le plus élevé, et en ce qu'elle y est élargie par rapport à l'épaisseur de la traverse.

12. Siège selon l'une ou plusieurs des revendications précédentes, caractérisé en ce que sur les deux faces extérieures du siège (34) ou d'un porte-siège (1) est prévue une poche respective (3, 103), de telle sorte que le siège (34) ou au moins le porte-siège (1) est situé en position déposée entre deux traverses de fixation (24, 124) du châssis de base (23).

13. Siège selon l'une ou plusieurs des revendications précédentes, caractérisé en ce que le siège (34) et/ou un porte-siège (1) est réalisé en une seule pièce en matière plastique avec les poches (3, 103).

14. Siège selon l'une ou l'autre des revendications 12 et 13, caractérisé en ce que les plans des cavités de poche (22, 122) et des traverses de fixation (24, 124) s'étendent approximativement parallèlement les uns aux autres et par rapport au plan longitudinal médian vertical du siège (34).

15. Siège selon l'une ou plusieurs des revendications précédentes, caractérisé en ce que le verrouillage à barre en position déposée couché à l'intérieur d'une poche (22, 122), dépasse par un corps de verrouillage (21, 121) à travers la paroi extérieure de la poche (22, 122), de telle sorte que le verrouillage peut être ramené en une position de libération par une pression depuis l'extérieur sur le corps de verrouillage (21, 121).

16. Siège selon l'une ou plusieurs des revendications précédentes, caractérisé en ce que sur la traverse de fixation (24, 124) est agencé un élément de blocage (28, 128) pour réaliser un verrouillage à frein.
